(19) Europäisches Patentamt
European Patent Office
Office européen des brevets

(11) EP 2 923 082 B1

(12) FASCICULE DE BREVET EUROPEEN

(45) Date de publication et mention
de la délivrance du brevet:
**11.01.2017 Bulletin 2017/02**

(21) Numéro de dépôt: **13791941.1**

(22) Date de dépôt: **22.10.2013**

(51) Int Cl.:
***F03G 3/00*** *(2006.01)*

(86) Numéro de dépôt international:
**PCT/EP2013/072027**

(87) Numéro de publication internationale:
**WO 2014/067810 (08.05.2014 Gazette 2014/19)**

(54) **DISPOSITIF PROPULSIF À TRANSMISSION DE QUANTITÉ DE MOUVEMENT**

TREIBMITTEL ZUR ÜBERTRAGUNG EINER DYNAMIK

PROPELLANT DEVICE FOR TRANSMITTING MOMENTUM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **31.10.2012 FR 1260441**

(43) Date de publication de la demande:
**30.09.2015 Bulletin 2015/40**

(73) Titulaire: **Airbus Group SAS
31700 Blagnac (FR)**

(72) Inventeur: **GENESTE, Jean-François
F-31200 Toulouse (FR)**

(74) Mandataire: **Ipside
7-9 Allées Haussmann
33300 Bordeaux Cedex (FR)**

(56) Documents cités:
**WO-A1-2005/003556      US-A- 5 782 134
US-A- 6 109 123      US-A1- 2006 060 013**

**Description**

La présente invention appartient au domaine des dispositifs propulsifs dans lesquels une quantité de mouvement est générée pour créer une force propulsive.

Plus particulièrement l'invention a trait à un dispositif propulsif pour véhicule dans lequel la quantité de mouvement est créée sans éjection de matière.

Plus particulièrement le dispositif propulsif en question est un véhicule destiné à des voyages habités ou non habités interplanétaires ou interstellaires.

Dans le domaine de la propulsion, il est connu, en particulier pour les applications spatiales, mais pas uniquement, de créer une force de propulsion sur un véhicule en communiquant une vitesse à une quantité de matière à bord du véhicule et en éjectant cette matière.

De façon connue, dans un véhicule formant un système isolé caractérisé par sa masse m0 et sa vitesse V0, la quantité de mouvement d'une masse dm éjectée à la vitesse ve s'exprime par le produit ve.dm de la masse éjectée par la vitesse d'éjection prise par rapport au véhicule.

Du fait de la conservation de la quantité de mouvement la vitesse du véhicule est alors modifiée d'une valeur dV0 suivant la relation connue :

$$m0.dV0 = ve.dm.$$

Lorsqu'une masse est éjectée de manière continue avec un débit dm/dt = p, l'équation précédente peut s'écrire:

$$\rho.ve.dt = m0.dV0$$

d'où la poussée générée par le système propulsif :

$$\rho.ve = m0.dV0 / dt$$

Sur un véhicule terrestre ou atmosphérique dont la propulsion est assurée par réaction, l'éjection continue de masse ne pose pas de problème insurmontable, la masse à éjecter étant prélevée dans le milieu ambiant, air ou eau, et accélérée dans le véhicule pour être éjectée après avoir acquis une quantité de mouvement.

Dans le cas des véhicules se propulsant sans pouvoir bénéficier de cette possibilité de prélever la masse à éjecter dans le milieu ambiant, comme dans le cas des propulsions par moteur fusée et dans le cas de la propulsion dans le vide il est alors nécessaire d'embarquer à bord du véhicule la masse à éjecter pour toute la durée de fonctionnement du système propulsif.

Malgré cette contrainte, les véhicules spatiaux sont aujourd'hui propulsés suivant ce principe.

Pour créer une poussée de propulsion donnée, il est possible d'utiliser un débit élevé et une vitesse d'éjection réduite ou un débit réduit et une vitesse d'éjection élevée et c'est en général cette seconde tendance qui est mise en oeuvre pour les véhicules spatiaux.

Mais même dans ce cas, comme le montre un simple calcul de l'ordre de grandeur de la masse qui doit être éjectée pendant le fonctionnement d'un système propulsif suivant ce principe, les contraintes apparaissent pratiquement insurmontables dans le cas de longs voyages interstellaires nécessitant d'acquérir des vitesses élevées pour les réaliser dans un temps acceptable.

La vitesse d'éjection est limitée suivant la théorie de la relativité générale à la vitesse de la lumière dans le vide soit c = 3*10E8 m/s.

Un moteur à plasma connu éjecte des ions accélérés à des vitesses proches de la vitesse de la lumière. Avec un débit par exemple de 2 mg/s tel qu'il est envisageable de le réaliser actuellement sur une installation embarquée, il est obtenu une poussée de 100 mN pour une énergie électrique consommée, à bord, de l'ordre de 1,5kW.

Pour obtenir une telle poussée pendant une année il aura été éjecté une masse totale de 63000 Kg dans ce cas qui n'aura permis à un véhicule de 100000 Kg, donc moins que deux fois la masse éjectée, d'atteindre qu'une vitesse de 5 Km/s (à comparer par exemple à la vitesse de libération de 11 Km/s pour la modeste attraction terrestre).

Il ne peut qu'être constaté qu'une telle consommation de matière pour un résultat encore loin du besoin pour un voyage interstellaire n'est pas acceptable.

Pour palier cette difficulté, il a été imaginé d'utiliser un flux de photon, par exemple du flux radiatif d'un corps noir orienté tel que dans le dispositif décrit dans la demande de brevet FR 2795457.

Toutefois si un tel dispositif s'affranchit de l'éjection de masse par l'utilisation de la pression de radiation, il n'est obtenu que des forces de poussée faibles par rapport aux dimensions du dispositif propulsif. ,

Le document US 2006/060013 est considéré comme étant l'état de la technique le plus proche.

Le dispositif propulsif de l'invention, destiné à exercer une force de propulsion sur un véhicule, procède par échange de quantité de mouvement.

Dans le dispositif propulsif la quantité de mouvement est obtenue par le déplacement d'au moins un piston de masse non nulle dont une accélération est assurée par une force prenant effet sur une structure du véhicule et dont le freinage est réalisé de manière isolée dans le dispositif propulsif sans qu'une force soit appliquée au véhicule.

Ainsi il est obtenu le transfert d'une quantité de mouvement au véhicule porteur suivant un axe d'accélération du piston, tendant à déplacer le véhicule dans la direction inverse du déplacement du piston, sans qu'il n'ait été éjecté de matière pour obtenir la quantité de mouvement souhaitée.

Le dispositif propulsif comporte au moins une cavité comportant une ou plusieurs parties cylindriques, dans laquelle ou lesquelles parties cylindriques le piston associé à une cavité est mobile, chaque partie cylindrique, dans laquelle le piston est susceptible de se déplacer, comportant un dispositif absorbeur d'une énergie cinétique du piston pour freiner le piston de manière isolé dans le dispositif propulsif.

Les parties cylindriques, de sections circulaires ou autres, assurent ainsi le guidage et la contention du piston de sorte que le piston est effectivement amené sur le dispositif absorbeur d'énergie pour être freiné sans échange d'énergie avec l'extérieur du dispositif de propulsion.

Dans une forme de réalisation, la cavité est étanche et contient un gaz et le piston est mobile dans la ou les parties cylindriques de la cavité de manière étanche de sorte que le gaz situé dans une partie cylindrique d'un côté du piston ne circule pas entre le piston et une paroi de la partie cylindrique vers un côté opposé du piston. Lorsque le piston est déplacé dans une partie cylindrique suite à une impulsion de quantité de mouvement il détermine alors deux zones de cette partie cylindrique sans échange de gaz, en particulier en présence d'une pression différente de gaz des deux côtés du piston. Dans ce mode de réalisation, l'énergie cinétique du piston est absorbé par la compression du gaz entre une face du piston et l'extrémité de la partie cylindrique vers laquelle le piston est déplacé, l'isolement du système résultant d'une condition que la compression est réalisée de manière sensiblement adiabatique.

Dans le dispositif propulsif une partie cylindrique d'une cavité, dans laquelle le piston doit être déplacé, comporte une première orientation d'un axe longitudinal de la dite partie cylindrique, correspondant à une direction dans laquelle il est souhaité créer une force de propulsion lorsque le piston est accéléré depuis une position de référence de la cavité, et comporte une seconde orientation, différente de la première orientation, lorsque le piston est ramené à la position de référence de la cavité.

De la sorte, la quantité de mouvement produite lorsque le piston, ramené vers la position de référence, doit être arrêté à cette position de référence ne s'exerce pas suivant la direction inverse de la quantité de mouvement produite lors de l'accélération précédente et n'annule donc pas les effets de cette dernière, ce qui aurait été le cas si l'orientation de la cavité n'avait pas été modifiée.

Lorsque le piston est accéléré depuis la position de référence de la cavité, il comprime le gaz contenu dans la partie cylindrique de la cavité entre le piston et l'extrémité fermée de cette partie cylindrique, compression adiabatique ou au moins sensiblement adiabatique, et le piston est ramené à la position de référence de la cavité sous l'effet de la pression du gaz comprimé dans la partie cylindrique de la cavité agissant sur le piston, sans apport d'énergie de l'extérieur.

Pour bloquer le piston pendant le temps nécessaire au changement de l'orientation souhaité pour la partie cylindrique dans laquelle se trouve le piston ayant comprimé le gaz, de préférence chaque partie cylindrique d'une cavité, dans laquelle un piston comprime ou est susceptible de comprimer le gaz, comporte au moins un verrou de piston apte à maintenir le piston immobile dans la partie cylindrique lorsque le gaz est comprimé.

Dans une forme de réalisation, le ou les pistons sont réalisés dans un matériau magnétique et chaque piston est accéléré, depuis la position de référence de la cavité dans laquelle il est mobile, au moyen d'un électroaimant situé, au moins temporairement, à proximité de l'extrémité de la partie cylindrique de la cavité dans laquelle le noyau est accéléré.

Pour assurer une accélération satisfaisante du piston dans le cas de parties cylindriques de grandes longueurs en regard du champ magnétique créé par l'électroaimant, un ou plusieurs électroaimants intermédiaires sont agencés la cas échéant entre la position de référence et l'électroaimant situé à proximité de l'extrémité de la partie cylindrique.

Il est ainsi possible de communiquer une impulsion de quantité de mouvement au piston par des moyens électromagnétiques totalement contrôlables et en limitant le nombre de parties mobiles du dispositif.

Dans une forme de réalisation, le dispositif propulsif comporte au moins une cavité en croix formée par deux cavités élémentaires cylindriques, d'axes longitudinaux orientés à angle droit, de sorte à former une croix comportant quatre parties cylindriques formant des branches de la croix, déterminant à une intersection de ces cavités élémentaires le point de référence de la cavité.

Le dispositif propulsif comporte également dans cette configuration de la cavité un système d'entraînement en rotation par quart de tours de la cavité en croix, dans le plan de la croix autour d'un axe passant par le centre de la croix, qui permet de faire tourner la cavité d'un angle de 90 degrés après que le piston a été accéléré depuis la position de référence de la cavité dans laquelle il est mobile pour produire une quantité de mouvement et avant que ce piston soit ramené à la position de référence de la cavité. Ainsi la modification de l'orientation de la partie cylindrique dans laquelle se trouve le piston est modifiée simplement et permet lorsque le piston est ramené au point de référence de ramener la cavité dans une configuration équivalente à celle depuis laquelle a été déplacé le piston pour générer une quantité de mouvement de propulsion au cours d'un cycle antérieur.

Afin de supprimer ou pour le moins de réduire le moment cinétique induit par la rotation d'une cavité en croix, le dispositif propulsif comporte de préférence au moins deux cavités en croix agencées entre elles pour être entraînées en rotation séparément. Dans ce cas le système d'entraînement en rotation des cavités entraîne les cavités en rotation dans des sens inversés et de manière synchronisée de sorte à minimiser un moment cinétique résultant des mouvements de rotation. Pour obtenir le résultat recherché, les cavités en croix sont disposées dans des plans parallèles et ont leurs centres sur un axe commun perpendiculaire aux plans des croix.

Dans une forme alternative de réalisation du dispositif propulsif, celui-ci comporte au moins une cavité cylindrique dans laquelle le piston détermine dans un volume sensiblement vide entre le piston et une première extrémité de la cavité, extrémité qui correspond à la position de référence du piston dans la cavité, et un volume contenant le gaz entre le piston et une seconde extrémité de la cavité, et comporte un système d'entraînement en rotation de la cavité cylindrique de sorte que la cavité cylindrique peut être tournée d'un angle de 180 degrés, de manière à inverser l'orientation d'un axe longitudinal de la cavité cylindrique, après que le piston (20, 20') a été accéléré depuis la position de référence de la cavité (10, 10') dans laquelle il est mobile pour produire une quantité de mouvement et avant que ledit piston soit ramené à ladite position de référence de ladite cavité.

Dans ce mode de réalisation à cavité cylindrique, de préférence le dispositif propulsif comporte au moins deux cavités cylindriques agencées pour permettre des rotations séparément de chacune des cavités dans des plans parallèles, et le système d'entraînement en rotation est agencé pour que les deux cavités puissent être tournées chacune d'un angle de 180 degrés, dans des sens inverses et de manière synchronisée de sorte à minimiser le moment cinétique résultant des mouvements de rotation.

Dans une forme de réalisation le système d'entraînement est agencé pour réaliser des inversions des sens de rotation des cavités.

Il est ainsi possible de diminuer les effets d'imperfections de réalisation qui ont pour conséquence des moments d'inertie et cinétiques différents en valeur absolue entre les différentes cavités.

Les inversions des sens de rotation sont par exemple réalisés de manière périodique, tous les n cycles, n pouvant être égal à 1, ou encore en fonction de mesures d'accélérations angulaires ou de déviations.

Pour encore diminuer les effets de dispersions des moments angulaires, le dispositif propulsif comporte par exemple une roue à inertie agencée pour compenser le moment d'inertie créé par les modifications de la direction d'une ou de plusieurs parties cylindriques de cavités.

La correction des effets de ces imperfections sur les moments cinétiques est au besoin réalisée, le cas échéant en complément des autres moyens, par un dispositif correcteur de moment d'inertie fonctionnant sur le principe de base du dispositif propulsif.

Le dispositif correcteur comporte une cavité cylindrique étanche présentant un axe longitudinal et contenant un gaz entre un piston magnétique et une extrémité de la cavité cylindrique à proximité de laquelle est placée un électroaimant agencé pour exercer une force d'attraction sur le piston et comprimer le gaz contenu dans la cavité. Le dispositif correcteur comporte en outre un échangeur thermique pour apporter ou extraire, du gaz contenu dans la cavité, une énergie sous forme thermique. Le dispositif correcteur est fixé à une structure du véhicule porteur du dispositif propulsif de sorte à créer un couple correcteur du moment cinétique induit par le dispositif propulsif.

Ainsi au moyen d'un dispositif correcteur dans lequel le cycle de compression-détente du gaz n'est pas adiabatique, il est créé une force suivant l'axe longitudinal du dispositif correcteur dont l'agencement permet de créer un couple de contrôle qui est alors réalisé sans éjection de matière.

La présente invention est décrite en référence aux figures qui, de manière non limitative, représentent schématiquement :

> figure 1 : un dispositif propulsif de l'invention avec une cavité en croix à quatre branches ;
> figures 2a, 2b et 2c : le dispositif propulsif de la figure 1 dans des étapes successives d'un cycle de fonctionnement ;
> figure 3 : un dispositif propulsif comportant une cavité à deux branches ;
> figure 4 :.une représentation en perspective axonométrique d'un dispositif propulsif à deux cavités en croix ;
> figure 5 : un dispositif propulsif à deux cavités cylindriques ;
> figure 6 : une représentation illustrée, dans le cas d'une cavité cylindrique de la figure 5, des étapes successives d'un cycle de fonctionnement du dispositif propulsif à deux cavités cylindriques ;
> figure 7 : le dispositif propulsif de la figure 4, vu suivant l'axe de rotation des cavités, comportant un dispositif correcteur de moment cinétique.

Les figures sont des illustrations schématiques des principes mis en oeuvre par l'invention sans soucis de dimensions ou d'échelle entre les différents composants du dispositif propulsif.

Les figures ne donnent pas de détails de réalisation de moyens ordinaires qui nécessiteraient d'être mis en oeuvre pour le fonctionnement du dispositif propulsif.

Il convient également de noter que pour la clarté des explications il sera considéré, implicitement ou explicitement, des hypothèses simplificatrices de sorte que certains phénomènes perturbateurs seront négligés dans certains cas au moins.

Par exemple, il pourra être considéré que les gaz utilisés dans l'invention sont des gaz parfaits, que les frottements sont négligeables, que le piston est sans fuite ou encore que le fonctionnement est adiabatique.

Dans un but de simplification il sera également utilisé de manière extensive le terme « cavité » qui selon le contexte sera compris comme désignant le volume formant la cavité elle même, ou la surface délimitant la cavité, ou une structure, non décrite, dans laquelle est réalisée le volume de la cavité, ou encore la cavité avec le piston qu'elle contient, l'électroaimant qui lui est associé et de manière générale tous les équipements qui lui sont associés.

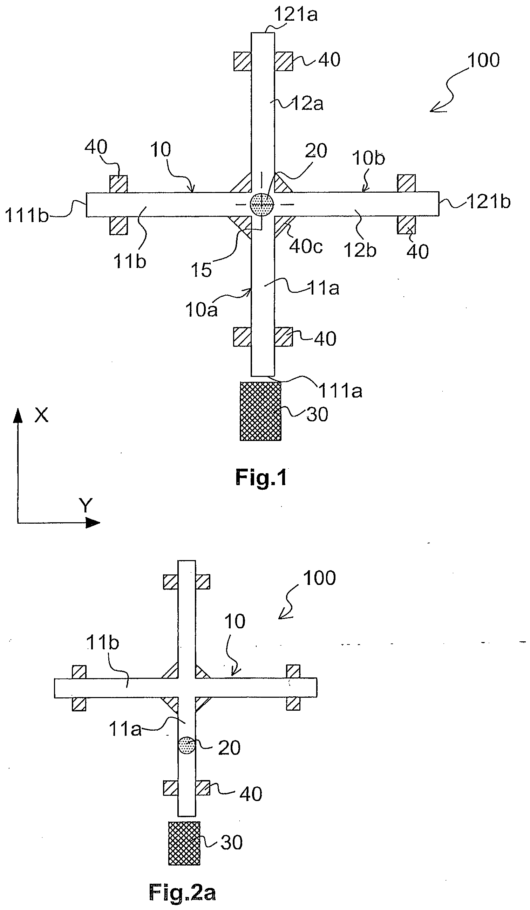

La figure 1 illustre un exemple des principes d'un premier mode de réalisation d'un dispositif de propulsion 100 suivant l'invention.

Le dispositif de propulsion 100 comporte une cavité 10, un piston 20, un électroaimant 30 et des verrous de piston 40, 40c.

La cavité 10, dont seule une paroi interne est dessinée sur les figures, est une cavité en croix formée par deux cavités élémentaires 10a, 10b cylindriques s'intersectant sensiblement à angle droit en leurs milieux et déterminant une croix ayant quatre branches 11a, 12a, 11b, 12b, a priori de longueurs égales L.

Chaque branche 11a, 12a, 11b, 12b est fermée à son extrémité, respectivement 111a, 121a, 111b, 121b, opposée à un centre 15 de la croix qui est pris, dans le cas de la cavité en croix, comme une position de référence.

La cavité 10 renferme un gaz dans un volume intérieur de la dite cavité délimité par la paroi des parties cylindriques et par les extrémités des branches de la cavité 10.

La paroi de la cavité est étanche au gaz contenu dans le volume intérieur de même que des fermetures des extrémités des branches.

La cavité 10 est montée mobile en rotation autour d'un axe passant par le centre 15 de la croix et orthogonal à un plan de la croix défini par les directions des deux cavités élémentaires 10a, 10b. La rotation de la cavité autour dudit axe est réalisée au moyen d'actionneurs d'un système d'entraînement en rotation, non représentés, dont les fonctions seront comprises lors de la description du fonctionnement du dispositif propulsif.

Le piston 20 est à l'intérieur de la cavité 10. En outre les dimensions et la forme du piston 20 sont telles que le piston est libre de se déplacer dans la cavité 10, suivant les quatre branches de ladite cavité à partir de la position de référence au centre 15 de la croix et en direction de chacune des extrémités 111a, 121a, 111b, 121b des branches de ladite croix, en assurant une étanchéité entre ledit piston 20 et la paroi dans les parties cylindriques.

Pour des raisons pratiques, chaque branche de la cavité 10 est de section circulaire et le piston est une sphère.

Cependant le choix d'une section circulaire n'est pas imposé et les parties cylindriques peuvent avoir d'autres formes de section, comme par exemple une section carrée, sous réserve que le piston ait lui-même une forme adaptée qui dans le cas d'un cylindre de section carrée est avantageusement cubique.

Le diamètre de la sphère est choisi pour obtenir entre la surface de la sphère et la paroi des parties cylindrique un jeu inférieur au libre parcours moyens des molécules du gaz contenu dans la cavité.

En outre, lorsque le piston 20 est à la position de référence au centre 15 de la croix, chaque branche contient une même quantité de gaz, ou au moins avec une pression de gaz égale, de sorte que la position centrale soit une position d'équilibre du piston en dehors de l'application de forces extérieures. Cette condition est obtenue sans problème du fait que dans la position centrale du piston il n'est pas nécessaire que l'étanchéité du piston 20 soit assurée et les volumes des différentes branches 11a, 12a, 11b, 12b peuvent communiquer de sorte que la pression du gaz dans les dites différentes branches s'équilibre naturellement.

Le piston 20 est réalisé dans un matériau magnétique.

Dans une forme de réalisation, l'électroaimant 30 est situé à une distance du centre 15 de la croix légèrement supérieure à la longueur L de chaque branche de ladite croix.

L'électroaimant est décalé par rapport au centre de la croix suivant la direction d'un axe longitudinal X d'un référentiel d'un véhicule, non représenté, porteur du dispositif propulsif 100.

L'électroaimant 30 est agencé pour créer un champ magnétique orienté suivant la direction de l'axe longitudinal X.

Dans la configuration décrite l'activation de l'électroaimant 30 crée un champ magnétique qui par son action sur le piston 20 en matériau magnétique crée une force F tendant à rapprocher ledit piston dudit électroaimant.

Dans une forme de réalisation non illustrée, un ou plusieurs électroaimants intermédiaires sont agencés répartis sur la longueur de la branche entre le centre de la croix 15 et l'électroaimant 30 situé à proximité de l'extrémité de la branche considérée. Dans ce cas, les électroaimants intermédiaires sont agencés pour générer un champ magnétique orienté suivant l'axe de la branche considéré.

Les verrous de piston 40, 40c consistent en tout dispositif pouvant immobiliser le piston 20 dans la cavité 10.

De tels moyens peuvent par exemple consister en des dispositifs mécaniques dans lesquels des ergots dans la cavité s'opposent au mouvement du piston.

De tels moyens peuvent également consister en des bobines de confinement du piston 20 en matériau magnétique dans une zone voulue.

Le dispositif comporte au moins un verrou de piston 40 sur chacune des branches 11a, 12a, 11b, 12b de la cavité situé entre le centre 15 de la croix et l'extrémité 111a, 121a, 111b, 121b de la branche correspondante, à priori décalés du côté des dites extrémités de branches.

Avantageusement le dispositif propulsif 100 comporte également un ou plusieurs verrous de piston 40c pour immobiliser le piston dans la partie centrale de la croix commune aux deux cavités élémentaires 10a, 10b.

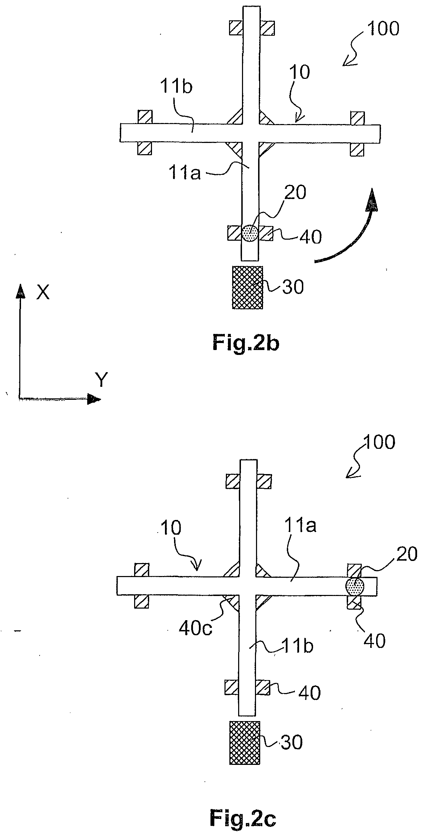

Le dispositif propulsif de la figure 1 fonctionne alors suivant la séquence suivante dont les différentes étapes sont illustrées sur les figures 1, 2a, 2b et 2c.

Dans une première étape, correspondant à une position d'équilibre illustrée sur la figure 1, l'électroaimant n'est pas activé, la cavité 10 est immobilisée en rotation avec une des cavités élémentaires, 10a dans l'exemple illustré, ayant un axe longitudinal de ladite cavité élémentaire parallèle à la direction longitudinale X.

L'autre cavité élémentaire, 10b dans l'exemple illustré, est donc orientée avec un axe longitudinal de ladite cavité suivant une direction perpendiculaire, parallèle à un axe transversal Y du référentiel du véhicule porteur.

Le piston 20 est situé dans la cavité 10 au centre 15 de la croix formée par les cavités élémentaires 10a, 10b, et le gaz à l'intérieur de la cavité 10 présente la même pression dans chacune des branches de la croix.

Dans une deuxième étape, l'électroaimant est activé, le piston 20 se déplace, figure 2a, en direction de l'extrémité 111a de la branche 11a se trouvant du côté de l'électroaimant 30 sous l'effet du champ magnétique produit par ledit électroaimant.

Dans la forme de réalisation comportant un ou des électroaimants intermédiaires, chaque électroaimant est activé en fonction de la position du piston 20 de sorte à exercer sur ledit piston une force orientée en direction de l'extrémité de la branche de la croix dans laquelle le piston se déplace. L'activation des électroaimants intermédiaires s'apparente ici au mode de fonctionnement d'un moteur électrique linéaire ou à celui, dans le monde des champs électrique' d'un accélérateur linéaire de particules.

Cette configuration est en particulier dans le cas de cavité cylindriques de grandes longueurs pour assurer une accélération efficace du piston qu'un seul électroaimant aurait des difficultés à créer.

Dans ce déplacement du piston 20, ledit piston comprime le gaz contenu dans la partie de la cavité 10 située dans la branche dans laquelle le piston se déplace, entre le piston 20 et l'extrémité 111a se trouvant à proximité de l'électroaimant 30, alors que la pression du gaz se trouve diminuée dans le reste de ladite cavité en raison de l'étanchéité du piston avec la paroi de la cavité.

Le déplacement du piston 20 se poursuit jusqu'à ce que la pression différentielle du gaz de chaque côté du piston équilibre la force F avec laquelle le piston est attiré par l'électroaimant 30, puis le piston arrête son déplacement lorsque cet équilibre est atteint, cas qui suppose que le champ magnétique créé par l'électroaimant est maintenu, et ou que le verrou de piston 40 de la branche considérée stoppe ledit piston ayant été accéléré, le cas échéant par une impulsion.

Lorsque le piston 20 est immobilisé, sa position proche de l'extrémité de la branche du côté de l'électroaimant est verrouillée par le verrou de piston de sorte que le piston ne revient pas vers le centre 15 de la croix sous l'effet de la pression exercée par le gaz comprimé lorsque l'électroaimant est désactivé.

Dans cette deuxième étape, l'électroaimant 30 a communiqué au piston 10, qui a une masse, une énergie créant une mise en mouvement dudit piston dont la quantité de mouvement sera communiquée au véhicule auquel sont liés l'électroaimant 30 et la cavité 10 en raison de la conservation de la quantité de mouvement totale.

A contrario, la cavité 10 et le gaz qu'elle renferme forment avec le piston 20 un système isolé.

Lorsque le piston 10 est ralenti et s'arrête sous l'effet des pressions exercées par le gaz dans la branche dans laquelle ledit piston se déplace, cet arrêt du piston se réalise sans échange d'énergie avec l'extérieur, au moins dans l'hypothèse où la compression est adiabatique.

L'arrêt du piston n'aura donc pas l'effet inverse, en termes de quantité de mouvement sur le véhicule porteur, de celui de la mise en mouvement créée avec l'électroaimant 30.

Dans une troisième étape, illustrée sur la figure 2b et la figure 2c, la bille est verrouillée dans la position atteinte à la fin de la deuxième étape, figure 2b, et le système d'entraînement en rotation de la cavité est activé pour faire tourner la cavité en croix dans son plan autour du centre 15 d'un angle de 90 degrés, figure 2c, de sorte que l'axe longitudinal de la cavité élémentaire 10a, initialement orientée suivant la direction longitudinale X, se trouve alors orientée suivant la direction transversale Y, l'autre cavité élémentaire 10b, orientée suivant la direction transversale Y à l'étape précédente, se retrouvant quant à elle orientée suivant la direction longitudinale X.

Le piston 20 est à cette étape toujours verrouillé.

Dans une quatrième étape, le verrou de piston 40 maintenant le piston 20 est relâché de sorte que ledit piston, soumis à la pression du gaz comprimé dans la branche, est poussé en direction du centre 15 de la croix.

Lorsque le piston 20 atteint ce point, les verrous de piston 40c placés au centre de la croix arrêtent alors le piston pour immobiliser celui-ci dans la position centrale et revenir à une configuration identique à celle de la figure 1 mais avec la cavité ayant tourné de 90 degrés.

Lors de cette quatrième étape, le blocage du piston 20 au centre 15 de la croix restitue la quantité de mouvement initialement communiquée au piston par l'électroaimant, mais compte tenu de la rotation de la croix réalisée lors de la troisième étape, cette quantité de mouvement est orientée suivant la direction transversale Y donc à 90 degrés de la direction X initiale.

Le bénéfice suivant la direction longitudinale X du déplacement voulu n'est donc pas perdu.

Un nouveau cycle d'activation de l'électroaimant peut alors être engagé de sorte que la nouvelle impulsion de quantité de mouvement du piston se cumule avec la ou les précédentes.

Ce premier mode de réalisation est susceptible de variantes.

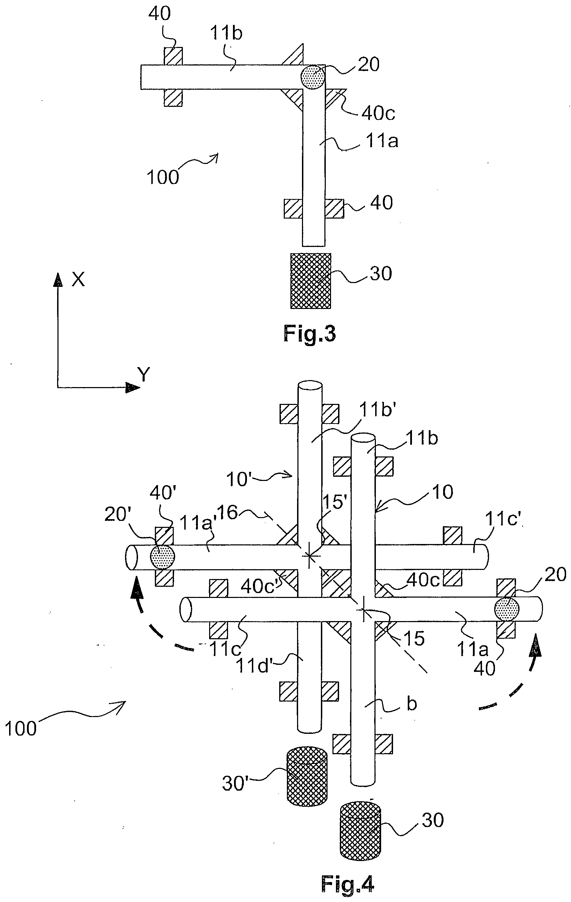

Par exemple il est possible de réaliser une cavité ne comportant que deux branches à angle droit, telle que la cavité illustrée sur la figure 3, par exemple les branches 11a et 11b qui sont utilisées dans le cycle décrit et nécessaires pour le cycle suivant. Dans ce cas il doit alors être réalisé, d'un cycle au suivant, des rotations à 90 degrés lors de la troisième étape alternativement dans un sens puis dans l'autre sens de manière à toujours obtenir après ladite rotation de 90 degrés une branche orientée suivant la direction longitudinale X dont l'extrémité est proche de l'électroaimant pour être dans une configuration permettant d'exécuter un nouveau cycle.

Par exemple, il est possible de considérer une cavité en croix vide de gaz dans laquelle chaque extrémité de la croix comporte un dispositif amortisseur du piston, un ressort par exemple, qui absorbe l'énergie cinétique du piston de sorte que la cavité et le piston forme toujours, comme dans le cas de la compression d'un gaz, un système isolé. L'énergie cinétique est transformée en énergie potentielle qui peut être restituée sous forme d'énergie cinétique par une impulsion créée par le ressort lorsque le verrou de piston libère ledit piston.

Par exemple il est possible d'agencer un électroaimant solidaire de la chaque branche, seul l'électroaimant de la branche dans laquelle le piston doit être déplacé étant alors activé au moment souhaité.

Dans ce cas il est possible de verrouiller le piston à proximité de l'extrémité d'une branche au moyen de l'électroaimant correspondant qui continue d'exercer une force sur le piston tant qu'il est activé, y compris pendant la rotation de la cavité. L'électroaimant réalise en ce cas, en plus de sa fonction nominale de déplacement du piston, une fonction de verrou de piston.

Ces formes de réalisation sont toutefois susceptibles de générer des inconvénients, par exemple déséquilibrage des parties tournantes, nécessité d'inverser fréquemment les sens de rotation des cavités, électroaimant mobiles ... qui devront être compensés par des dispositifs particuliers. Dans ces cas l'homme du métier devra établir un bilan prenant en considération la masse, le volume, la fiabilité et le coût global du système propulsif qu'il doit réaliser, processus général dans la conception des systèmes.

Le premier mode de réalisation qui vient d'être décrit présente, y compris dans le cas des exemples de variantes, un premier inconvénient de créer une force orientée suivant la direction latérale Y lorsque le piston est ramené à sa position de repos.

Cette force orientée latéralement a pour effet de provoquer une courbure de trajectoire d'un véhicule balistique. S'il est pris la précaution lors de la troisième étape de faire tourner la cavité alternativement suivant des rotations à 90 degrés inversées, chaque impulsion latérale sera de signe opposé à la précédente conduisant à une force moyenne nulle suivant cette direction latérale. Il est alors nécessaire d'inverser régulièrement le sens de rotation, par exemple à chaque cycle ce qui peut s'avérer pénalisant.

Un deuxième inconvénient est la création d'un couple autour de l'axe de rotation du fait du moment cinétique induit par la rotation de la croix, moment cinétique qui est d'autant plus important que la masse du piston sera grande, ce qui sera recherché pour obtenir une force suffisante générée par le système propulsif. Ici encore des dispositifs annexes de stabilisation peuvent être mis en oeuvre pour compenser ces effets, mais ils peuvent nécessiter une éjection de masse non négligeable dans un véhicule spatial, ce qui va à l'encontre de la solution recherchée par l'invention.

Dans un deuxième mode de réalisation de l'invention, illustré sur la figure 4, le dispositif propulsif comporte deux cavités 10, 10' indépendantes en croix réalisées suivant le premier mode décrit.

Les cavités 10, 10' indépendantes sont agencées de sorte que leurs axes de rotation 16, passant par les centres 15, 15' des croix, sont confondus.

Un électroaimant 30, 30' est associé à chaque cavité de manière similaire de sorte à produire dans chaque cavité le déplacement du piston 20, 20' dans la même direction.

Dans une variante de réalisation, l'électroaimant est commun aux deux cavités. Dans le cas où il est mis en oeuvre des électroaimant intermédiaires, lesdits électroaimants intermédiaires peuvent le cas échéant également être commun aux deux cavités.

Chaque cavité fonctionne suivant le même cycle que dans l'exemple de réalisation du premier mode de réalisation.

Ainsi lors de la deuxième étape chaque piston 20, 20' est déplacé en direction de l'électroaimant 30, 30' de la cavité 10, 10' respective et les effets en terme de quantité de mouvement des deux pistons se cumulent.

Lors de la troisième étape, les deux cavités 10, 10' sont tournées de 90 degrés autour de leur axe 16 commun de rotation, simultanément, mais dans des sens de rotation opposés, le système d'entraînement en rotation, non représenté, étant alors conçu pour assurer ces mouvements de rotation.

Ainsi, s'il a été pris la précaution de réaliser les cavités de sorte que des parties tournantes des dites deux cavités ont des moments d'inertie identiques, a priori les cavités sont identiques et cette condition est respectée à des imperfections de réalisation prés, il n'est pas créé de moment cinétique perturbateur lors de la rotation simultanée des deux cavités, au moins dans un système parfait.

Lors de la quatrième étape, du fait qu'à la fin de la troisième étape les pistons 20, 20' de chacune des deux cavités 10, 10' se trouvent, comme dans l'illustration de la figure 4, en des positions symétriques suivant la direction latérale Y par rapport à l'axe 16 de rotation des cavités, les forces induites par le retour en position centrale des pistons 10, 10' sont de même intensité mais de sens opposé et leur résultante donc nulle.

Il n'est pas, dans ce mode de réalisation, créé de poussée latérale perturbant la trajectoire du véhicule.

Dans ce cas il n'est donc pas nécessaire, en théorie, d'inverser les sens de rotation des cavités 10, 10' qui peuvent être entraînées en rotation suivant un mouvement continu ou quasi continu.

Ce deuxième mode de réalisation qui est un perfectionnement du premier mode décrit est susceptible lui même de variantes.

Certaines de ces variantes correspondent aux mêmes caractéristiques modifiées que celles présentées dans le premier mode de réalisation, l'homme du métier identifie sans difficulté les variantes décrites qui trouvent application dans ce second mode de réalisation.

Dans une variante non illustrée, le dispositif de propulsion comporte plus de deux cavités, tout en restant en nombre pair, dont les axes de rotation sont confondus. Dans ce cas les effets propulsifs de chaque cavité s'ajoutent aux effets des autres cavités sans créer de poussée latérale.

Une telle architecture de système propulsif présente l'avantage de délivrer des poussées différentes suivant le nombre de cavités, plus précisément de paires de cavités, actives.

Une cavité est ici considérée comme non active si elle ne produit pas de poussée, ce qui est obtenu en n'activant pas l'électroaimant correspondant, que la cavité soit entraînée en rotation ou non, dans le cas où n'est fixée sur un même arbre de rotation qu'une cavité active.

Il est également possible dans cette architecture de reconfigurer le dispositif propulsif en fonction de panne conduisant à rendre inutilisable une ou plusieurs cavités, reconfiguration qui peut résulter en la modification du nombre de cavités en fonctionnement et de leurs sens de rotation pour retrouver un dispositif propulsif produisant une poussée dans des conditions similaires au deuxième mode de réalisation décrit.

Ainsi, il est possible d'améliorer la fiabilité du dispositif propulsif et de conserver une poussée, réduite, même en cas de pannes.

Il est également possible dans ce deuxième mode de réalisation de ne pas avoir des cavités identiques en nombre pair et ou des pistons de même masse.

Par exemple il peut être réalisé une première cavité associée à deux cavités secondes agencées sur le même axe de rotation mais de part et d'autre de la première cavité et symétriquement. Dans ce cas, chaque cavité seconde est réalisée de sorte que la poussée qu'elle génère est moitié de celle de la première cavité et de sorte que son moment d'inertie est également moitié de celui de la première cavité.

Les deux cavités secondes sont couplées en fonctionnement et sont en termes de poussée et de moment d'inertie équivalentes à la première cavité au sens de rotation prêt.

De cet agencement il résulte que lors du retour des pistons en position centrale lors de la dernière étape d'un cycle il n'est pas créé de couple autour de l'axe longitudinal X.

Dans la mesure où les deux cavités du deuxième mode de réalisation décrit précédemment sont nécessairement décalées dans une direction perpendiculaire au plan XY, comme dans le cas de la figure 4, les forces opposées en direction résultant des retours des pistons au centre de leur cavités respectives sont la source d'un couple perturbateur. C'est précisément ce couple perturbateur qui se trouve annulé par la configuration à trois cavités proposée.

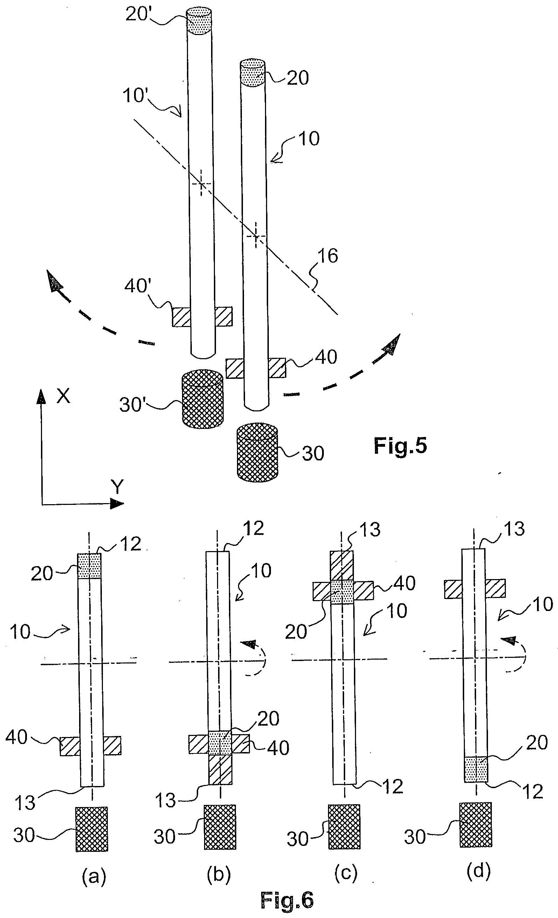

La figure 5 illustre un troisième mode de réalisation d'un dispositif propulsif 100 suivant l'invention.

Suivant ce mode de réalisation il n'est plus mis en oeuvre des cavités en forme de croix mais des cavités cylindriques.

Une cavité 10, 10' cylindrique dans ce mode de réalisation correspond à une branche de la cavité en croix qui est étanche à ses deux extrémités.

La cavité 10 cylindrique, également illustrée isolée sur la figure 6(a), enferme un piston 20, qui dans ce cas n'est pas nécessairement sphérique et peut être cylindrique, et un électroaimant 30 est agencé à une extrémité de la cavité cylindrique.

La cavité 10 cylindrique est de longueur Lp et est donc fermée à chacune d'une première extrémité 12 et d'une seconde extrémité 13 de ladite cavité. La cavité 10 renferme un gaz de manière étanche de manière similaire également aux modes de réalisation précédents.

Dans ce mode de réalisation, contrairement au mode avec une cavité en croix, au repos le piston 20 est positionné dans la position de référence à la première extrémité 12 de la cavité 10, l'électroaimant 30 étant lui dans cette position du côté de la seconde extrémité 13.

Le gaz contenu dans la cavité 10 est donc totalement situé, sauf pour des quantités marginales, d'un même côté du piston 20, dans l'exemple illustré entre le piston 20 et la seconde extrémité 13.

L'électroaimant 30 est avantageusement placé à l'extérieur de la cavité 10, configuration qui permet d'éviter de faire traverser la paroi de ladite cavité par des fils d'alimentation dudit électroaimant, mais ledit électroaimant peut être agencé à l'intérieur de la cavité du fait que sa position relative par rapport à ladite cavité lorsqu'il activé est toujours identique.

Les autres caractéristiques de la cavité 10, du piston 20- et de l'électroaimant 30, et le cas échéant du verrou de piston 40 sont, dans ce mode de réalisation, similaires à celles des modes de réalisation décrit précédemment.

Il convient de noter que dans cette configuration, dans laquelle la vitesse du piston est freinée par la compression du gaz contenu dans la cavité, il n'est plus besoin de mettre en oeuvre un verrou de piston équivalent à celui du centre de la croix dans le mode réalisation avec une cavité en croix. En effet dans la position de référence du piston, équivalent à la position centrale dans la cavité en croix, le piston est en appui sur la première extrémité 12 de la cavité 10 cylindrique et y est maintenu de manière stable par la pression du gaz dans la cavité.

Comme dans les autres modes de réalisation, lorsque l'électroaimant est activé, le piston 20 se déplace, figure 6(b), en direction de l'électroaimant vers la seconde extrémité 13.

Dans ce déplacement du piston 20, ledit piston comprime le gaz contenu dans la cavité 10. Dans ce mode toutefois un vide est maintenu, en l'absence de fuite et de l'introduction de gaz extérieur, entre le piston 20 et la première extrémité 12 en raison de l'étanchéité du piston ce qui a seulement pour première conséquence d'augmenter la différence de pression entre les deux faces du piston 20.

Le déplacement du piston 20 se poursuit jusqu'à ce que la pression du gaz qui est comprimé équilibre la force F avec laquelle le piston est attiré ou accéléré par l'électroaimant 30, puis le piston arrête son déplacement lorsque cet équilibre est atteint. Le piston 20 peut être maintenu dans cette position en maintenant l'activation de l'électroaimant 30, et ou en activant le verrou de piston 40.

Le résultat est bien sûr le même que lors de la deuxième étape des modes de réalisation décrits précédemment en ce qui concerne la quantité de mouvement générée suivant l'axe de la cavité 10 cylindrique et en valeur absolue orientée du côté opposé au déplacement du piston.

Dans le cas d'une cavité 10 cylindrique, il n'est cependant pas avantageux lors de la troisième étape de faire tourner l'axe longitudinal de la cavité d'un angle de 90 degrés car le retour du piston 20 à sa position initiale, dans ce mode de réalisation, ne replace pas l'ensemble cavité + piston + électroaimant dans la configuration permettant de créer une nouvelle impulsion de quantité de mouvement suivant la direction longitudinale X.

Dans ce mode de réalisation, au cours de la troisième étape, le dispositif propulsif réalise, lorsque le piston est verrouillé dans la position dans laquelle le gaz est comprimé, une rotation de 180 degrés de la cavité qui se retrouve orientée dans le sens inverse du sens initial suivant la direction de l'axe longitudinal X comme illustré sur la figure 6(c).

Dans cette position, au cours de la quatrième étape, le verrou de piston 40 est actionné pour libérer le piston qui est poussé par le gaz comprimé. Dans ce mode de réalisation, le piston n'est d'une part pas arrêté à la position de référence par le verrou de piston du centre de la cavité en croix mais plus simplement par la première extrémité 12 de la cavité 10 cylindrique, figure 6(d) et d'autre part l'arrêt du piston génère une impulsion de quantité de mouvement qui est orientée en valeur absolue dans le même sens que l'impulsion de quantité de mouvement créé lors de la deuxième étape.

Dans ce mode de réalisation une cinquième étape est alors réalisée dans laquelle la cavité 10 cylindrique est à nouveau soumise à une rotation de 180 degrés pour reprendre sa position initiale de la figure 6(a) est être en mesure de commencer un nouveau cycle.

En considérant à nouveau la figure 5, on constate que le dispositif propulsif comporte deux cavités 10, 10' cylindriques telles que celle des figures 6(a) a 6(d) dont les détails de fonctionnement viennent d'être décrits.

Ces deux cavités sont agencées dans leurs positions initiales avec leurs axes longitudinaux parallèles à l'axe longitudinal X et pour réaliser les rotations prévues lors des troisième et cinquième étapes dans des plans parallèles autour d'un même axe de rotation 16.

Enfin, pour éviter les inconvénients d'un moment cinétique créé par la mise en rotation des cavités, les deux cavités 10, 10' sont tournées de 180 degrés simultanément et dans des sens opposés, comme dans le cas du dispositif propulsif à deux cavités en croix avec un angle de 90 degrés.

Bien que les agencements du dispositif propulsif comportant deux ou plus cavités en croix ou deux ou plus cavités cylindriques permettent de compenser les effets du moment cinétique créé par les rotations de chacune des cavités, une telle compensation ne peut pas être parfaite en raison des imperfections de réalisation desquelles il résulte que le moment d'inertie de parties mobiles de chaque couple de cavités 10, 10' ne peuvent pas être mathématiquement identique.

Le moment cinétique résultant des rotations synchronisées des parties mobiles ne pouvant pas être strictement nul, le dispositif propulsif comporte de préférence une roue d'inertie, non représentée, liée au véhicule propulsé, d'axe de rotation orthogonal au plan de rotation des cavités et qui va, suivant les principes établis dans le domaine de la stabilisation des satellites, compenser les effets du moments cinétique résiduel du dispositif propulsif.

Cependant une vitesse de la roue d'inertie va se trouver accélérée du fait du moment cinétique compensé avec un risque de saturation de la dite roue d'inertie. Il est dans ce cas nécessaire de désaturer la roue d'inertie, ce qui suivant les méthodes conventionnelles est réalisé par des tuyères avec éjection de matière.

Pour éviter une opération de désaturation de ladite roue d'inertie, et ainsi éviter une telle éjection de matière, les sens de rotation des cavités sont inversés périodiquement, bien évidemment de manière simultanée pour une paire de cavités couplées fonctionnellement.

L'inversion des sens de rotation est par exemple périodique de sorte que le moment cinétique résiduel se verra inversé et la roue d'inertie aura alors un mouvement sinusoïdal qui évitera une saturation de ladite roue d'inertie.

L'inversion des sens de rotation est par exemple commandée en fonction de capteurs indiquant une déviation du véhicule propulsé ou une limite atteinte par la roue d'inertie.

Dans une forme de réalisation, pour assurer un réglage fin du couple généré par les insuffisances des systèmes à inertie, le dispositif propulsif 100 comporte un dispositif correcteur 50 à une cavité cylindrique 52 suivant les principes du dispositif propulsif de l'invention, tel que celui représenté sur la figure 6a ou 6b, et comportant un piston 54 pour comprimer un gaz contenu dans la cavité 52, un électroaimant 55 pour actionner le piston et un verrou de piston 56 pour immobiliser le piston de manière contrôlée.

Le dispositif correcteur 50 est agencé de sorte que lorsque le dit dispositif correcteur crée une force, il génère un couple autour de l'axe de rotation 16 des cavités 10, 10', cavités en croix ou cavités cylindriques, du dispositif propulsif 100.

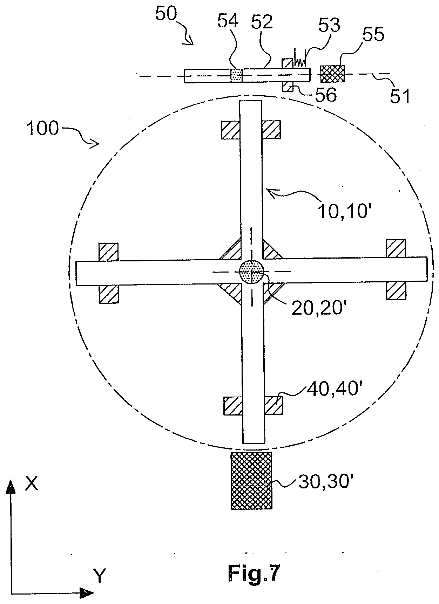

Comme dans l'exemple illustré sur la figure 7, un tel résultat est obtenu par exemple en agençant le dispositif correcteur 50 avec un axe longitudinal 51, qui est également l'axe suivant lequel une force peut être créée, sensiblement tangent à un cercle, centré sur l'axe de rotation 16 des cavités 10, 10', dans lequel s'inscrit la rotation des dites cavités.

Une cavité cylindrique 52 du dispositif correcteur 50 est fixe dans le référentiel du véhicule porteur et donc la force qu'il produit en fonctionnement adiabatique est nulle en moyenne. Dans ce cas, pour produire une force moyenne non nulle, le fonctionnement du dispositif correcteur 50 n'est pas adiabatique.

Dans le dispositif correcteur 50, le gaz est refroidi ou réchauffé par l'intermédiaire d'un échangeur thermique 53 au cours d'un cycle d'un piston 54 et la quantité de mouvement produite lors du retour dudit piston vers la position de repos, pendant lequel le gaz est détendu, est différente de celle produite lors de la compression du gaz.

En régulant les échanges d'énergie thermiques du dispositif correcteur 50, il est contrôlé une force générée et donc un couple autour de l'axe 16 de rotation des cavités 10, 10' du dispositif propulsif 100 qui permet de gérer de manière précise un moment d'inertie parasite résiduel induit par ledit dispositif propulsif, moment d'inertie parasite qui aurait pour effet de produire une dérive d'un véhicule spatial.

Dans les exemples de réalisation, un piston est accéléré par le moyen d'un champ magnétique généré par un électroaimant lié au véhicule propulsé, éventuellement lié à la cavité dans laquelle il produit ses effets.

Cependant tout moyen pour communiquer une vitesse initiale suffisante au piston pour atteindre la position souhaitée dans laquelle, le piston sera temporairement verrouillé, est utilisable. Par exemple il est possible de transmettre une impulsion de vitesse au piston par un choc appliqué sur une face arrière du piston.

De même, le piston, qui est arrêté, dans les exemples décrits, vers l'extrémité de la cavité cylindrique par la compression adiabatique du gaz contenu dans la cavité qui constitue dans ce cas un système physique isolé, peut être arrêté par tout moyen répondant à la condition que le système soit un système isolé dans cette phase d'immobilisation du piston. Un tel moyen d'arrêt est par exemple un ressort prenant appui sur l'extrémité de la cavité vers laquelle le piston est déplacé.

Le cas échéant, un même véhicule pourra mettre en oeuvre plusieurs dispositifs propulsifs de l'invention agencés de façon à contrer des dérives dans le temps des déséquilibres des moments cinétiques dans les deux sens de rotation possibles des cavités.

Le dispositif propulsif de l'invention permet donc d'obtenir une poussée sur un corps sans éjecter de matière, avantage particulièrement important dans le cas de véhicules spatiaux destinés à effectuer des voyages sur des distances importantes nécessitant d'acquérir des vitesses élevées pour limiter la durée dudit voyage.

Il est évident que le dispositif propulsif 100 pour fonctionner exige d'être alimenté avec l'énergie nécessaire pour produire le travail communiqué au véhicule.

Le dispositif pour son fonctionnement peut n'utiliser que de l'énergie sous forme électrique, pour alimenter les électroaimants principalement et dans une moindre mesure tous les accessoires nécessaires au fonctionnement du dispositif propulsif.

A bord d'un véhicule spatial interstellaire une énergie électrique est par exemple produite par générateur radio-isotope dont la technologie est connue et dont la durée de fonctionnement est supérieure à 20 ans.

A titre d'illustration d'une mise en oeuvre du dispositif propulsif de l'invention, il peut être calculé qu'à accélération constante l'étoile Proxima du Centaure (Alpha Centaury C) située à 270000 unité astronomiques (4, 22 années lumière) pourra être atteinte en 18 années avec une accélération constante de 0,265 m/s2 (en négligeant les effets de la relativité générale) la vitesse atteinte à l'arrivée étant alors c/2, la moitié de la vitesse de la lumière.

Dans l'hypothèse d'un véhicule spatial d'une masse de 300kg tel qu'un véhicule sonde, l'accélération suppose l'application d'une force moyenne de 79,5 N (la masse multipliée par l'accélération).

La force générée par le dispositif propulsif étant intérieure au système formé par le véhicule spatial, celle-ci s'applique à un objet à vitesse relative nulle par rapport audit dispositif propulsif. Dans ce cas en supposant la force moyenne comme une constante, la puissance moyenne transmise de manière continue au véhicule spatial pour son accélération est de 10,5 W.

Avec une hypothèse de rendement du système propulsif de seulement 1% pour prendre en compte le côté impulsionnel dudit système propulsif et les pertes dans les différents composants mécaniques et électriques, il est établi qu'une puissance embarquée de 1 kW est suffisante pour réaliser la mission. Un générateur radio isotope ayant la capacité de produire une telle puissance est parfaitement accessible avec les technologies actuelles.

Bien que particulièrement avantageux dans le cas de véhicules spatiaux pour lesquels le dispositif propulsif de l'invention rend les voyages longs et lointains accessibles, le dispositif propulsif peut être adapté à tous types de véhicules pour lesquels une poussée est recherchée sans qu'il soit nécessaire d'éjecter de la matière pour créer une force de réaction ou d'appliquer une force d'action sur la matière environnante.

En particulier, le dispositif propulsif de l'invention présente l'avantage d'un rendement propulsif amélioré dans le cas d'un engin propulsé dans un fluide comme un avion par exemple.

Ce constat tient en ce que la traîné varie comme le carré de la vitesse et que, dans un système classique de propulsion, la puissance nécessaire à la propulsion varie avec le cube de cette même vitesse. Avec le dispositif propulsif de l'invention, la puissance nécessaire à la propulsion varie seulement avec le carré de la vitesse, comme la traînée. Une application numérique immédiate montre que pour un avion volant à 800km/h, le besoin en puissance de propulsion, devient, avec le dispositif propulsif de l'invention de l'ordre du millième de celui nécessaire avec les systèmes de propulsion connus.

**Revendications**

1. Dispositif propulsif (100), pour exercer une force de propulsion sur un véhicule, par échange de quantité de mouvement **caractérisé en ce que** la quantité de mouvement est obtenue par le déplacement d'au moins un piston (20, 20') de masse non nulle dans au moins une cavité (10, 10') étanche et contenant un gaz, ladite cavité comportant une ou plusieurs parties cylindriques, dans laquelle ou lesquelles parties cylindriques l'au moins un piston (20, 20') est mobile de manière étanche de sorte que le gaz situé dans une partie cylindrique d'un côté d'un piston ne circule pas entre ledit piston et une paroi de la partie cylindrique vers un côté opposé dudit piston, piston (20, 20') dont une accélération est assurée par une force prenant effet sur une structure du véhicule et dont le freinage est réalisé de manière isolée dans ledit dispositif propulsif sans qu'une force soit appliquée au véhicule par un dispositif absorbeur d'une énergie cinétique du piston agencé dans ladite cavité (10, 10') pour freiner ledit au moins un piston de manière isolée dans le dispositif propulsif, le freinage du piston résultant d'une compression du gaz entre une face du piston et une extrémité de la cavité dans laquelle le piston est déplacé.

2. Dispositif propulsif suivant la revendication 1 dans lequel une partie cylindrique d'au moins une cavité, dans laquelle le piston (20, 20') doit être déplacé, comporte une première orientation d'un axé longitudinal de la dite partie cylindrique, correspondant à une direction dans laquelle il est souhaité créer une force de propulsion lorsque ledit piston est accéléré depuis une position de référence de la cavité (10, 10'), et comporte une seconde orientation, différente de la première orientation, lorsque le piston est ramené à la position de référence de ladite cavité.

3. Dispositif suivant la revendication 2 dans lequel le piston (20, 20') comprime le gaz contenu dans la partie cylindrique de la cavité entre ledit piston et une extrémité de ladite partie cylindrique, lorsque ledit piston est accéléré depuis la position de référence de la cavité, et dans lequel le piston est ramené à ladite position de référence de ladite cavité sous l'effet de la pression du gaz comprimé dans ladite partie cylindrique de la cavité.

4. Dispositif propulsif suivant la revendication 3 dans lequel chaque partie cylindrique d'une cavité (10, 10'), dans laquelle partie cylindrique un piston (20, 20') comprime le gaz, comporte au moins un verrou de piston (40) apte à maintenir le piston (20, 20') immobile lorsque le gaz est comprimé dans ladite partie cylindrique.

5. Dispositif propulsif suivant l'une des revendications 2 à 4 comportant au moins un électroaimant (30, 30') d'accélération d'un piston (20, 20') en matériau magnétique, situé, au moins temporairement, à proximité d'une extrémité de la partie cylindrique de la cavité dans laquelle ledit noyau est accéléré depuis la position de référence de la cavité (10, 10') dans laquelle il est mobile, et comportant le cas échéant un ou plusieurs électroaimants intermédiaires entre la position de référence et l'électroaimant (30, 30').

6. Dispositif propulsif suivant l'une des revendications 2 à 5 comportant au moins une cavité (10, 10') en croix formée par deux cavités élémentaires (10a, 10b) cylindriques, d'axes longitudinaux orientés à angle droit, de sorte à former une croix comportant quatre parties cylindriques formant des branches de la croix, déterminant à une intersection (15, 15') des dites cavités élémentaires le point de référence de ladite cavité, et comportant un système d'entraînement en rotation de ladite au moins une croix, dans un plan de la croix et autour d'un axe (16) passant par un centre de ladite croix, de sorte à permettre à ladite au moins une cavité en croix d'être tournée d'un angle de 90 degrés après que le piston (20, 20') a été accéléré depuis la position de référence de la cavité (10, 10') dans laquelle il est mobile pour produire une quantité de mouvement et avant que ledit piston soit ramené à ladite position de référence de ladite cavité.

7. Dispositif propulsif suivant la revendication 6 comportant au moins deux cavités (10, 10') en croix agencées entre elles pour être entraînées en rotation séparément et dans lequel le système d'entraînement en rotation des cavités entraîne les cavités en rotation dans des sens inversés et de manière synchronisée de sorte à minimiser un moment cinétique résultant des dits mouvements de rotation.

8. Dispositif propulsif suivant l'une des revendications 2 à 5 comportant au moins une cavité (10, 10') cylindrique, dans laquelle le piston (20, 20') détermine dans ladite cavité un volume sensiblement vide entre ledit piston et une première extrémité (12) de ladite cavité, correspondant à la position de référence dudit piston dans ladite cavité, et un volume contenant le gaz entre ledit piston et une seconde extrémité (13) de ladite cavité, et un système d'entraînement en rotation de ladite au moins une cavité de sorte que ladite au moins une cavité cylindrique peut être tournée d'un angle de 180 degrés, de manière à inverser l'orientation d'un axe longitudinal de ladite cavité cylindrique, après que le piston (20, 20') a été accéléré depuis la position de référence de la cavité (10, 10') dans laquelle il est mobile pour produire une quantité de mouvement et avant que ledit piston soit ramené à ladite position de référence de ladite cavité.

9. Dispositif propulsif suivant la revendication 8 comportant au moins deux cavités (10, 10') cylindriques, agencées pour permettre des rotations séparées des dites au moins deux cavités dans des plans parallèles, et comportant un système d'entraînement en rotation de chacune des au moins deux cavités agencé de sorte que les dites au moins deux cavités peuvent être tournées chacune d'un angle de 180 degrés dans des sens inverses et de manière synchronisée de sorte à minimiser un moment cinétique résultant des dits mouvements de rotation.

10. Dispositif propulsif suivant l'une des revendications 6 à 9 dans lequel le dispositif d'entraînement en rotation est agencé pour réaliser l'entraînement en rotation des cavités suivant les deux sens de rotation possibles autour de l'axe de rotation de chacune des dites cavités.

11. Dispositif propulsif suivant l'une des revendications 2 à 10 dans lequel un moment d'inertie créé par des modifications de l'orientation d'une ou de plusieurs parties cylindriques de cavités est compensé totalement ou en partie par une roue à inertie.

12. Dispositif propulsif suivant l'une des revendications 2 à 11 comportant un dispositif correcteur (50) de moment d'inertie, ledit dispositif correcteur comportant une cavité cylindrique (52) étanche d'axe longitudinal (51) contenant un gaz entre un piston (54) magnétique et une extrémité de ladite cavité cylindrique à proximité de laquelle est placée un électroaimant (55) agencé pour exercer une force d'attraction sur le piston (54) et comprimer le gaz contenu dans la cavité, ledit dispositif correcteur comportant un échangeur thermique (53) pour apporter ou extraire du gaz contenu dans la cavité une énergie sous forme thermique, ledit dispositif correcteur étant fixé à une structure d'un véhicule porteur du dispositif propulsif de sorte à créer couple correcteur des moments d'inertie induits par le dispositif propulsif.

13. Véhicule comportant un dispositif propulsif (100) conforme à l'une des revendications précédentes.

**Patentansprüche**

1. Antriebsvorrichtung (100), um eine Antriebskraft durch Impulsaustausch auf ein Fahrzeug auszuüben, **dadurch gekennzeichnet, dass** der Impuls durch die Bewegung von mindestens einem Kolben (20, 20') einer Masse ungleich Null in mindestens einem dichten und Gas enthaltenden Hohlraum (10, 10') erzielt wird, wobei der Hohlraum einen oder mehrere zylindrische Abschnitte aufweist, in welchem oder welchen zylindrischen Abschnitten der mindestens eine Kolben (20, 20') in dichter Weise derartig beweglich ist, dass das in einem zylindrischen Abschnitt auf einer Seite eines Kolbens befindliche Gas nicht zwischen dem Kolben und einer Wand des zylindrischen Abschnitts zu einer dem Kolben gegenüberliegenden Seite strömt, wobei eine Beschleunigung des Kolbens (20, 20') durch eine Kraft gewährleistet wird, welche an einer Struktur des Fahrzeugs wirksam wird und dessen Abbremsen in der Antriebsvorrichtung in isolierter Weise, ohne dass eine Kraft auf das Fahrzeug aufgebracht wird, durch eine Vorrichtung zur Dämpfung einer kinetischen Energie des in dem Hohlraum (10, 10') angeordneten Kolbens durchgeführt wird, um den mindestens einen Kolben in isolierter Weise in der Antriebsvorrichtung abzubremsen, wobei das Abbremsen des Kolbens zu einer Kompression des Gases zwischen einer Vorderseite des Kolbens und einem Ende des Hohlraums, in welchem der Kolben bewegt wird, führt.

2. Antriebsvorrichtung nach Anspruch 1, bei welcher ein zylindrischer Abschnitt von mindestens einem Hohlraum, in welchem der Kolben (20, 20') bewegt werden soll, eine erste Ausrichtung einer longitudinalen Achse des zylindrischen Abschnitts, welcher einer Richtung entspricht, in welcher es gewünscht ist, eine Antriebskraft zu bilden, wenn der Kolben aus einer Referenzposition des Hohlraums (10, 10') beschleunigt wird, und eine zweite Ausrichtung aufweist, welche von der ersten Ausrichtung verschieden ist, wenn der Kolben in die Referenzposition des Hohlraums zurückgeführt wird.

3. Vorrichtung nach Anspruch 2, bei welcher der Kolben (20, 20') das in dem zylindrischen Abschnitt des Hohlraums enthaltene Gas zwischen dem Kolben und einem Ende des zylindrischen Abschnitts komprimiert, wenn der Kolben aus der Referenzposition des Hohlraums beschleunigt wird, und bei welcher der Kolben in die Referenzposition des Hohlraums unter der Einwirkung des Drucks des in dem zylindrischen Abschnitt des Hohlraums komprimierten Gases zurückgeführt wird.

4. Antriebsvorrichtung nach Anspruch 3, bei welcher jeder zylindrische Abschnitt eines Hohlraums (10, 10'), in welchem zylindrischen Abschnitt ein Kolben (20, 20') das Gas komprimiert, mindestens eine Kolbenverriegelung (40) aufweist, welche geeignet ist, den Kolben (20, 20') unbeweglich festzuhalten, wenn das Gas in dem zylindrischen Abschnitt komprimiert ist.

5. Antriebsvorrichtung nach einem der Ansprüche 2 bis 4, aufweisend mindestens einen Elektromagneten (30, 30') zur Beschleunigung eines Kolbens (20, 20') aus magnetischem Material, welcher zumindest zeitweise in der Nähe eines Endes des zylindrischen Abschnitts des Hohlraums angeordnet ist, in welchem der Kern aus der Referenzposition des Hohlraums (10, 10') beschleunigt wird, in welchem er beweglich ist, und gegebenenfalls aufweisend einen oder mehrere zwischen der Referenzposition und dem Elektromagnet (30, 30') angeordnete Elektromagnete.

6. Antriebsvorrichtung nach einem der Ansprüche 2 bis 5, aufweisend mindestens einen Kreuzhohlraum (10, 10'), welcher aus zwei elementaren, zylindrischen Hohlräumen (10a, 10b) mit im rechten Winkel ausgerichteten longitudinalen Achsen derartig gebildet ist, um ein Kreuz zu bilden, welches vier zylindrische, Arme des Kreuzes bildende Abschnitte aufweist und an einem Kreuzungspunkt (15, 15') der elementaren Hohlräume den Referenzpunkt des Hohlraums festlegt, und aufweisend ein System zum in Drehung Versetzen des mindestens einen Kreuzes in einer Ebene des Kreuzes und um eine Achse (16), welche durch einen Mittelpunkt des Kreuzes verläuft, derartig, dass es dem mindestens einen Kreuzhohlraum ermöglicht wird, um einen Winkel von 90 Grad gedreht zu werden, nachdem der Kolben (20, 20') aus der Referenzposition des Hohlraums (10, 10'), in dem er beweglich ist, um einen Impuls zu erzeugen, beschleunigt worden ist und bevor der Kolben in die Referenzposition des Hohlraums zurückgeführt ist.

7. Antriebsvorrichtung nach Anspruch 6, aufweisend mindestens zwei Kreuzhohlräume (10, 10'), welche zueinander angeordnet sind, um getrennt in Drehung versetzt zu werden, und bei der das System zum in Drehung Versetzen der Hohlräume die Hohlräume in umgekehrten Richtungen und in synchronisierter Weise derartig in Drehung versetzt, um ein kinetisches Moment, welches sich aus den Drehbewegungen ergibt, zu minimieren.

8. Antriebsvorrichtung nach einem der Ansprüche 2 bis 5, aufweisend mindestens einen zylindrischen Hohlraum (10, 10'), in welchem der Kolben (20, 20') in dem Hohlraum ein im Wesentlichen leeres Volumen zwischen dem Kolben und einem ersten Ende (12) des Hohlraums, welches der Referenzposition des Kolbens in dem Hohlraum entspricht, und ein das Gas zwischen dem Kolben und einem zweiten Ende (13) des Hohlraums enthaltendes Volumen festlegt, und ein System zum in Drehung Versetzen des mindestens einen Hohlraums derartig, dass der mindestens eine zylindrische Hohlraum um einen Winkel von 180 Grad gedreht werden kann, um die Ausrichtung einer longitudinalen Achse des zylindrischen Hohlraums umzukehren, nachdem der Kolben (20, 20') aus der Referenzposition des Hohlraums (10, 10'), in welchem er beweglich ist, um einen Impuls zu erzeugen, beschleunigt worden ist und bevor der Kolben in die Referenzposition des Hohlraums zurückgeführt ist.

9. Antriebsvorrichtung nach Anspruch 8, aufweisend mindestens zwei zylindrische Hohlräume (10, 10'), welche eingerichtet sind, um getrennte Drehungen der mindestens zwei Hohlräume in parallelen Ebenen zu ermöglichen, und aufweisend ein System zum in Drehung Versetzen jedes der mindestens zwei Hohlräume derartig, dass die mindestens zwei Hohlräume jeweils um einen Winkel von 180 Grad in umgekehrten Richtungen und in synchronisierter Weise derartig gedreht werden können, um ein kinetisches Moment, welches sich aus den Drehbewegungen ergibt, zu minimieren.

10. Antriebsvorrichtung nach einem der Ansprüche 6 bis 9, bei welchem die Drehantriebsvorrichtung eingerichtet ist, um das in Drehung Versetzen der Hohlräume gemäß den beiden möglichen Drehrichtungen um die Drehachse der jeweiligen Hohlräume zu bewerkstelligen.

11. Antriebsvorrichtung nach einem der Ansprüche 2 bis 10, bei welcher ein durch Modifikationen der Ausrichtung eines oder mehrerer zylindrischer Abschnitte von Hohlräumen gebildetes Massenträgheitsmoment vollständig oder zum Teil durch ein Schwungrad kompensiert wird.

12. Antriebsvorrichtung nach einem der Ansprüche 2 bis 11, aufweisend eine Vorrichtung zur Korrektur (50) eines Massenträgheitsmoments, wobei die Korrekturvorrichtung einen dichten, zylindrischen Hohlraum (52) mit longitudinaler Achse (51) aufweist, welcher ein Gas zwischen einem magnetischen Kolben (54) und einem Ende des zylindrischen Hohlraums enthält, in dessen Nähe ein Elektromagnet (55) angeordnet ist, welcher eingerichtet ist, um eine Anziehungskraft auf den Kolben (54) auszuüben und das in dem Hohlraum enthaltene Gas zu komprimieren, wobei die Korrekturvorrichtung einen Wärmetauscher (53) aufweist, um dem in dem Hohlraum enthaltenen Gas eine Energie in thermischer Form zuzufügen oder zu entziehen, wobei die Korrekturvorrichtung an einer Struktur eines Trägerfahrzeugs der Antriebsvorrichtung derartig befestigt ist, um ein Korrekturdrehmoment der durch die Antriebsvorrichtung induzierten Massenträgheitsmomente zu bilden.

13. Fahrzeug, aufweisend eine Antriebsvorrichtung (100) nach einem der vorhergehenden Ansprüche.

## Claims

1. Propellant device (100), for exerting a propulsion force on a vehicle, by exchange of quantity of movement, **characterized in that** the quantity of movement is obtained by the displacement of at least one piston (20, 20') of non-zero mass in at least one cavity (10, 10') which is sealed and contains a gas, said cavity comprising one or more cylindrical parts, in which cylindrical part or parts the at least one piston (20, 20') is sealingly mobile such that the gas situated in a cylindrical part on one side of a piston does not circulate between said piston and a wall of the cylindrical part towards an opposite side of said piston (20, 20'), an acceleration of which piston is provided by a force taking effect on a structure of the vehicle and the slowing down of which piston is produced in an isolated manner in said propellant device without a force being applied to the vehicle by a device absorbing a kinetic energy of the piston arranged in said cavity (10, 10') to slow down said at least one piston in an isolated manner in the propellant device, the slowing down of the piston resulting from a compression of the gas between a face of the piston and an end of the cavity in which the piston is displaced.

2. Propellant device according to Claim 1, in which a cylindrical part of at least one cavity, in which the piston (20, 20') must be displaced, comprises a first orientation of a longitudinal axis of said cylindrical part, corresponding to a direction in which it is desired to create a propulsion force when said piston is accelerated from a reference position of the cavity (10, 10'), and comprises a second orientation, different from the first orientation, when the piston is brought back to the reference position of said cavity.

3. Device according to Claim 2, in which the piston (20, 20') compresses the gas contained in the cylindrical part of the cavity between said piston and an end of said cylindrical part, when said piston is accelerated from the reference position of the cavity, and in which the piston is brought back to said reference position of said cavity under the effect of the pressure of the compressed gas in said cylindrical part of the cavity.

4. Propellant device according to Claim 3, in which each cylindrical part of a cavity (10, 10'), in which cylindrical part a piston (20, 20') compresses the gas, comprises at least one piston lock (40) capable of keeping the piston (20, 20') immobile when the gas is compressed in said cylindrical part.

5. Propellant device according to one of Claims 2 to 4, comprising at least one electromagnet (30, 30') for accelerating a piston (20, 20') made of magnetic material, situated, at least temporarily, in proximity to an end of the cylindrical part of the cavity in which said core is accelerated from the reference position of the cavity (10, 10') in which it is mobile, and if necessary comprising one or more intermediate electromagnets between the reference position and the electromagnet (30, 30').

6. Propellant device according to one of Claims 2 to 5, comprising at least one cross-shaped cavity (10, 10') formed by two individual cylindrical cavities (10a, 10b), of longitudinal axes oriented at right angles, so as to form a cross comprising four cylindrical parts forming branches of the cross, determining, at an intersection (15, 15') of said individual cavities, the reference point of said cavity, and comprising a system for driving said at least one cross in rotation, in a plane of the cross and about an axis (16) passing through a centre of said cross, so as to allow said at least one cross-shaped cavity to be turned by an angle of 90 degrees after the piston (20, 20') has been accelerated from the reference position of the cavity (10, 10') in which it is mobile to produce a quantity of movement and before said piston is brought back to said reference position of said cavity.

7. Propellant device according to Claim 6, comprising at least two cross-shaped cavities (10, 10') arranged mutually to be driven in rotation separately and in which the system for driving the cavities in rotation drives the cavities in rotation in reverse directions and in a synchronized manner so as to minimize a kinetic moment resulting from said rotational movements.

8. Propellant device according to one of Claims 2 to 5, comprising at least one cylindrical cavity (10, 10') in which the piston (20, 20') determines in said cavity a substantially empty volume between said piston and a first end (12) of said cavity corresponding to the reference position of said piston in said cavity, and a volume containing the gas between said piston and a second end (13) of said cavity, and a system for driving said at least one cavity in rotation such that said at least one cylindrical cavity can be turned by an angle of 180 degrees so as to reverse the orientation of a longitudinal axis of said cylindrical cavity, after the piston (20, 20') has been accelerated from the reference position of the cavity (10, 10') in which it is mobile to produce a quantity of movement and before said piston is brought back to said reference position of said cavity.

9.  Propellant device according to Claim 8, comprising at least two cylindrical cavities (10, 10'), arranged to allow separate rotations of said at least two cavities in parallel planes, and comprising a system for driving each of the at least two cavities in rotation arranged such that said at least two cavities can each be turned by an angle of 180 degrees in reverse directions and in a synchronized manner so as to minimize a kinetic moment resulting from said rotational movements.

10. Propellant device according to one of Claims 6 to 9, in which the rotational driving device is arranged to produce the driving of the cavities in rotation in the two possible directions of rotation about the axis of rotation of each of said cavities.

11. Propellant device according to one of Claims 2 to 10, in which a moment of inertia created by modifications of the orientation of one or more cylindrical parts of cavities is totally or partly compensated by an inertia wheel.

12. Propellant device according to one of Claims 2 to 11, comprising a moment of inertia correcting device (50), said correcting device comprising a sealed cylindrical cavity (52) of longitudinal axis (51) containing a gas between a magnetic piston (54) and an end of said cylindrical cavity in proximity to which is placed an electromagnet (55) arranged to exert an attraction force on the piston (54) and compress the gas contained in the cavity, said correcting device comprising a heat exchanger (53) to add to or extract from the gas contained in the cavity an energy in heat form, said correcting device being fixed to a structure of a vehicle bearing the propellant device so as to create torque correcting the moments of inertia induced by the propellant device.

13. Vehicle comprising a propellant device (100) according to one of the preceding claims.

121a

40

12a

100

40    10    20    10b

111b    121b

11b    40c    12b    40

15    10a    11a

40

10a    11a

111a

30

X

Y

**Fig.1**

100

11b    10

11a    20

40

30

**Fig.2a**

**Fig.2b**

**Fig.2c**

Fig.3

Fig.4

Fig.5

(a)  (b)  (c)  (d)

Fig.6

Fig.7

**EP 2 923 082 B1**

## RÉFÉRENCES CITÉES DANS LA DESCRIPTION

### Documents brevets cités dans la description

- FR 2795457

- US 2006060013 A